## Europäisches Patentamt

## European Patent Office

## Office européen des brevets

(19)

(11) Veröffentlichungsnummer: **0 255 622**
**B1**

(12) # EUROPÄISCHE PATENTSCHRIFT

(45) Veröffentlichungstag der Patentschrift:
**04.10.89**

(51) Int. Cl.⁴: **B 32 B 27/32,** C 09 J 3/14,
C 08 L 23/16

(21) Anmeldenummer: **87109967.7**

(22) Anmeldetag: **10.07.87**

(54) **Heisssiegelbare Mehrschichtfolien aus Polyolefinen.**

(30) Priorität: **19.07.86 DE 3624543**

(43) Veröffentlichungstag der Anmeldung:
**10.02.88 Patentblatt 88/6**

(45) Bekanntmachung des Hinweises auf die Patenterteilung:
**04.10.89 Patentblatt 89/40**

(84) Benannte Vertragsstaaten:
**AT BE CH DE ES FR GB IT LI NL SE**

(56) Entgegenhaltungen:
**EP-A-0 118 060**
**EP-A-0 184 094**
**DE-A-3 444 866**

(73) Patentinhaber: **Wolff Walsrode Aktiengesellschaft,
Postfach, D-3030 Walsrode 1 (DE)**

(72) Erfinder: **Schinkel, Ingo, Dipl.- Ing., Witternstrasse
14, D-3030 Walsrode (DE)**
Erfinder: **Böhner, Jürgen, Dipl.- Ing., Am
Haselbusch 3, D-3036 Bomlitz (DE)**

(74) Vertreter: **Zobel, Manfred, Dr., c/o BAYER AG
Konzernverwaltung RP Patentabteilung
Bayerwerk, D-5090 Leverkusen (DE)**

# EP 0 255 622 B1

## Beschreibung

Die vorliegende Erfindung betrifft polyolefinische Mehrschichtfolien mit einer niedrigen Siegelanspringtemperatur und einer guten Siegelfestigkeit und ausgezeichneten Gebrauchseigenschaften, die sich daher besonders als Einschlagfolien eignen.

Mehrschichtfolien aus Polyolefinen, die eine Polypropylenbasisschicht und eine heißsiegelbare Schicht aus einem Propylencopolymerisat aufweisen, sind seit langem bekannt (s. DE-A-1 694 694). Diese Folien weisen eine relativ hohe Siegelanspringtemperatur, nämlich $\geq 120°C$ auf, so daß sie sich vor allem zur Einschlagverpackung von empfindlichen Gütern nur bedingt eignen.

Es ist außerdem bekannt, daß Mehrschichtfolgen, die eine Heißsiegelschicht, enthaltend Polybuten-1 bzw. Co- und/oder Terpolymere von Buten-1 wie z. B. Mischungen aus Ethylen/Propylen/Buten-1-Terpolymeren und/oder Propylen/Buten-1-Copolymeren, eine niedrige Siegelanspringtemperatur bei ausreichend hoher Siegelfestigkeit aufweisen. (Verwiesen wird auf US-A-4 275 120 und de Prospekt Tafmer XR der Fa. Mitsui Petrochemical.) Solche Siegelschichten haben in aller Regel aber die Nachteile, daß ihre optischen Eigenschaften durch mechanische Einflüsse stark beeinträchtigt werden und außerdem ihre Gebrauchseigenschaften, wie Antiblockverhalten in Automaten, nicht den Anforderungen genügen. Deshalb ist auch der Einsatz dieser Mehrschichtfolien begrenzt.

Es stellte sich daher die Aufgabe, Mehrschichtfolien zur Verfügung zu stellen, die die aufgeführten Nachteile nicht aufweisen und sich daher als Einschlagfolien insbesondere für Lebensmittel und Zigarettenpäckchen hervorragend eignen.

Überraschenderweise gelang dies durch Bereitstellen der erfindungsgemäßen Mehrschichtfolien, deren Siegelschicht eine Mischung aus einem Ethylen/Propylen/Buten-Terpolymeren, gegebenenfalls einem Ethylen/Buten-1-Copolymeren, und aus einem Propylen/Ethylen-Copolymeren umfaßt. Völlig unerwarteterweise weisen solche Mehrschichtfolien in einem bestimmten Mischungsbereich der genannten Komponenten eine nahezu konstante, niedrige Siegelanspringtemperatur bei ausreichend hoher Siegelfestigkeit, und nicht nur hervorragende optische Eigenschaften, sondern auch sehr gute mechanische Eigenschaften, wie Kratzfestigkeit, auf. Dabei ist insbesondere überraschend, daß trotz eines hohen Anteils an Propylen/Ethylen-Copolymerisaten in dem Siegelschichtmaterial die Siegelanspringtemperatur unter 100°C bleibt. In diesem Mischungsbereich weisen die erfindungsgemäßen Mehrschichtfolien außerdem eine ausreichend gute Automatengängigkeit auf.

Gegenstand der vorliegenden Erfindung sind daher heißsiegelbare, mindestens monoaxial orientierte Mehrschichtfolien aus einer Basisschicht aus einem Polypropylen und wenigstens einer heißsiegelbaren Schicht aus Terpolymeren und Copolymeren aus Propylen-, Buten-1 und Ethylen-Einheiten. Solche Mehrschichtfolien, an sich bekannt aus der DE-A-3 444 866, sind dadurch gekennzeichnet, daß die Heißsiegelschicht besteht aus

1. 35 bis 70 Gew.-%, vorzugsweise 38 bis 60 Gew.-% aus Olefinpolymerisaten aus
A) wenigstens einem Terpolymeren bestehend aus
a) 65 bis 82 Gew.-% Propylen,
b) 25 bis 14 Gew.-% Buten-1,
c) 10 bis 4 Gew.-% Ethylen und
B) 0 bis 7 Gew.-% eines Copolymeren aus Ethylen und Buten-1,
wobei die Summe aus A) und B) bzw. aus a) bis c) immer 100 Gew.-% und der Monomerengehalt der Komponenten A) und B) immer 65 bis 82 Gew.-% Propylen, 25 bis 14 Gew.-% Buten-1 und 10 bis 4 Gew.-% Ethylen ergeben müssen,
2. 65 bis 30 Gew.-%, vorzugsweise 62 bis 40 Gew.-% eines Propylen/Ethylen-Copolymeren mit 2 bis 6 Gew.-%, vorzugsweise 3 bis 5 Gew.-% Ethylen, wobei die Summe aus 1. und 2. immer 100 Gew.-% ergeben muß, und
3. gegebenenfalls üblichen Hilfs- und Zusatzstoffen.

Die Basisschicht besteht aus einem Polypropylen. Vorzugsweise wird ein isotaktisches Polypropylen mit einer Dichte von 0,9 bis 0,91 g/cm$^3$ und einem Schmelzflußindex von 1 bis 4 g/10 Minuten bei 230°C/21,2 N (nach DIN 53 735) verwendet.

Die Basisschicht kann 3 bis 15 Gew.-%, vorzugsweise 8 bis 12 Gew.-% mit dem Polypropylen unverträgliche Additive, vorzugsweise anorganische Additive, wie Kalciumcarbonat, Siliciumdioxid, Natriumaluminiumsilikat und/oder Titandioxid enthalten, wodurch eine Opakisierung der Folie erreicht werden kann. Es kann aber auch ein organisches, unverträgliches Additiv fein verteilt in der Basisschicht enthalten sein, vorzugsweise Teilchen aus Polystyrol, Polymethylmethacrylat, Polytetrafluorethylen, Polycarbonat und/oder Copolymeren dieser Verbindungen. Unverträglichkeit bedeutet dabei, daß solche polymeren Additive einen anderen Schmelzpunkt und/oder ein anderes Streckverhältnis als das Polypropylen aufweisen, so daß es beim biaxialen Orientierungsprozeß der Mehrschichtfolie zum Aufreißen der Polymermatrix und damit Vakuolenbildung kommt, die auch bei Verwendung anorganischer Additive auftritt. Ein weiterer Gegenstand der vorliegenden Erfindung sind daher auch opake Mehrschichtfolien, die die erfindungsgemäße Heißsiegelschicht aufweißen.

Die Olefinpolymerisate (A) der Heißsiegelschicht, die sich aus einem Propylen/Buten-1/Ethylenterpolymeren und gegebenenfalls einem Ethylen/Buten-1-Copolymerisat zusammensetzen, sollten vorzugsweise einen Schmelzflußindex von 0,1 bis 16 g/10 Minuten bei 230°C und 21,2 N (DIN 53 735), besonders bevorzugt von 4 bis 10 g/10 Minuten bei 230°C und 21,2 N aufweisen. Die Herstellung der statistischen Terpolymeren und der statistischen Copolymeren ist Stand der Technik und wird z. B. in der Japanischen Offenlegungsschrift JA-OS-

2

35 487/1974 beschrieben. Es sind gängige Handelsprodukte.

Die Komponente 2. des Heißsiegelmaterials ist ein Propylen/Ethylen-Copolymeres, das vorzugsweise einen Schmelzindex (gemessen nach DIN 53735) von 0,1 bis 25, bevorzugt zwischen 3 bis 10g/10 min. bei 230°C, und 21,2 N aufweist. Die Herstellung solcher statistischer Copolymerer ist dem Fachmann bekannt und sie sind als Handelsprodukte erhältlich.

Die erfindungsgemäßen heißsiegelbaren Mehrschichtfolien können außerdem eine Gassperrschicht, vorzugsweise eine Sauerstoffsperrschicht aus einem verseiften Ethylen/Vinylacetat-Copolymerisat mit 40 bis 85 Mol-% Vinylacetateinheiten, die zumindestens zu 90 Gew.-%, vorzugsweise zu mehr als 96 Gew.-%, verseift sind, und gegebenenfalls übliche Haftvermittlerschichten enthalten. Die Herstellung solcher Ethylen/Vinylalkohol-Copolymerisate ist bekannt. Ein weiterer Gegenstand der vorliegenden Erfindung sind daher auch heißsiegelbare Mehrschichtfolien, die eine geringe Gasdurchlässigkeit und einen hervorragenden Aromaschutz aufweisen.

Die Ausrüstung der Schichten der erfindungsgemäßen Mehrschichtfolien mit üblichen Additiven und Hilfsmitteln, wie z. B. Gleitmitteln, Antiblockmitteln und Antistatika, in üblichen Mengen, ist möglich.

Die erfindungsgemäßen Mehrschichtfolien können nach üblichen Verfahren wie Laminierung, Beschichtung oder Schmelz(co)extrusion produziert werden, wobei das Heißsiegelschichtmaterial vorzugsweise durch direkte Compoundierung hergestellt werden kann. Die erfindungsgemäßen Mehrschichtfolien werden mindestens monoaxial, bevorzugt biaxial gereckt. Dabei wird die Längsreckung, vorzugsweise im Verhältnis 5 : 1 bis 7 : 1 und die Querreckung im Verhältnis 7 : 1 bis 10 : 1 vorgenommen.

In den erfindungsgemäßen Mehrschichtfolien sollte die Polypropylenbasisfolie vorzugsweise eine Dicke von 20 bis 50 μm und die heißsiegelbare Schicht vorzugsweise eine Dicke von 0,8 bis 2 μm, besonders bevorzugt um 1 μm, aufweisen.

Die erfindungsgemäßen Mehrschichtfolien eignen sich besonders als Verpackungsmaterial, insbesondere als Einschlagfolien und vorzugsweise für Lebensmittel und Zigarettenpäckchen und können zu diesem Zweck auch bedruckt und mit Aufreißstreifen versehen werden. Besonders bevorzugte Verpackungsmaterialien sind solche, die auf beiden Oberflächen der Basisschicht eine Heißsiegelschicht aufweisen.

In den nachfolgenden Beispielen werden folgende Prüfungsmethoden zur Bestimmung der Werte verwendet:

Die Trübung wurde nach ASTM D 1003-61 bestimmt.

Zur Bestimmung des Glanzes der Folie wurde nach ASTM D 2457-70 vorgegangen. Ermittelt wurden die Werte mit einem Glossmeter der Firma Gardner unter Verwendung der 45°-Geometrie.

Zur Bestimmung der Festigkeit der Siegelnähte wird die Siegelfestigkeit bei niedrigem Siegeldruck geprüft. Dabei wird unter Siegelfestigkeit die Kraft verstanden, die erforderlich ist, um eine unter definierten Bedingungen (0,35 N pro cm$^2$, 0,5 Sekunden, glatte Siegelbalken) und den in der Tabelle angegebenen Siegeltemperaturen hergestellte Siegelnaht zu trennen. Die Siegelfestigkeit wird in Newton angegeben und auf einen 15 mm breiten Prüfstreifen bezogen.

Zur Bestimmung der Kratzfestigkeit wird die unter Verwendung der Ulbrichtschen Kugel bestimmte Trübung festgestellt. Dabei wird die Trübung, wie oben angegeben, einer Folie vor und nach dem Verkratzen gemessen. Das Verkratzen erfolgt mit Hilfe von 42 g staubfreiem Siliciumcarbid, das auf eine um 45° gegen die Horizontale geneigte Folie gestreut wird.

Zur Bestimmung der Automatengängigkeit wird nach dem Automatenblocktest der Automatenblockwert gemessen. Unter diesem Blockwert wird die Kraft verstanden, die notwendig ist, zwei in eine Folie eingeschlagene Holzmodelle, die unter definierter Temperatur und Prüfzeit in einem Trockenschrank gelagert werden, scherend zu trennen. Die zur Trennung notwendige Kraft wird in N angegeben. Zur Durchführung der Prüfung werden jeweils zwei in die zu prüfende Folie eingeschlagene Holzmodelle (72 x 42 x 10 mm und einem Gewicht von 0,3 N) mit den (mit Filz beklebten) Prüfflächen aufeinander in den auf 65°C vorgeheizten Wärmeschrank gelegt und mit ebenfalls auf 65°C vorgeheizten Gewichten (2 N) belastet. Unter dieser Belastung werden die mit der zu prüfenden Folie eingeschlagenen Holzmodelle (Prüffläche 30 cm$^2$) 2,25 Std. belassen und nach der Entnahme aus dem Wärmeschrank 1 1/2 Std. abgekühlt. Nach dieser Abkühlzeit werden die mit der zu prüfenden Folie eingeschlagenen Modelle in die Abzugsvorrichtung einer Zugprüfmaschine eingelegt und scherend getrennt. Dabei wird die hierfür notwendige Kraft in N gemessen. Die Prüfgeschwindigkeit auf der Zugprüfmaschine beträgt 100 mm/min, die Einstellzeit 2 sek.

**Beispiel**

Zur Herstellung des Heißsiegelmaterials wird ein Propylen/Ethylen-Copolymerisat in den in der nachfolgenden Tabelle angegebenen Gewichtsverhältnissen mit einem statistischen Terpolymerisat aus 71 Gew.-% Propylen-, 20 Gew.-% Buten-1- und 9 Gew.-% Ethylen-Einheiten mit einem Schmelzindex von 7 g/10 Minuten bei 230°C/21,2 N, 2 Gew.-% Stearinsäureamid, 0,15 Gew.-% eines thermoplastischen Polyamid-12 als Abstandshalter, 0,5 Gew.-% Erucasäureamid und 0,5 Gew.-% N,N-Bis-(2-hydroxyethyl)-($C_{12}$ bis $C_{16}$)-alkylamin vermischt und nach üblichen Verfahren mit der Basisfolie aus Polypropylen der Dichte 0,905 g/cm$^3$ und dem Schmelzindex von 3,3 g/10 Minuten bei 230°C/21,2 N verbunden und verstreckt, so daß eine Verbundfolie mit einer Längsreckung im Verhältnis 5 : 1 und einer Querreckung im Verhältnis 10 : 1 erhalten wird, wobei die Basisfolie eine Dicke von 18 μm und die auf beiden Oberflächen der Basisschicht befindlichen Siegelschichten jeweils eine Dicke von 1 μm aufweisen.

<u>Tabelle</u>

| Terpolymer : P/E Copolymer | *100 : 0 | 58 : 42 | 39 : 61 |
|---|---|---|---|
| Trübung (%) | 1,5 | 1,4 | 1,4 |
| Glanz (GE) | 87/87,2 | 88,1/87,7 | 89/88,6 |
| Kratzfestigkeit | 1,1/23 | 1,0/19,4 | 1,0/19,4 |
| Niederdrucksiegelung | | | |
| Siegelfestigkeit (N/15 mm) | | | |
| 90°C | 1,61 | 1,68 | 1,37 |
| 95°C | 1,98 | 2,09 | 1,78 |
| 100°C | 2,29 | 2,39 | 2,19 |
| Blockwert (N) | 39,6 | 10,2 | 7,6 |

*Vergleich

**Patentansprüche**

1. Heißsiegelbare, mindestens monoaxial orientierte Mehrschichtfolie aus einer Basisschicht aus einem Polypropylen und wenigstens einer heißsiegelbaren Schicht aus Ter- und Copolymeren, die aus Propylen-, Buten-1- und Ethylen-Einheiten bestehen, dadurch gekennzeichnet, daß die Heißsiegelschicht zusammengesetzt ist aus

1. 35 bis 70 Gew.-%, vorzugsweise 38 bis 60 Gew.-% Olefinpolymeren aus
A) wenigstens einem Terpolymeren bestehend aus
a) 65 bis 82 Gew.-% Propylen-,
b) 25 bis 14 Gew.-% Buten-1-,
c) 10 bis 4 Gew.-% Ethylen-Einheiten und

B) 0 bis 7 Gew.-% eines Copolymeren aus Ethylen und Buten-1-Einheiten,
wobei die Summe aus A) und B) bzw. aus a) bis c) immer 100 Gew.-% und der Gehalt der Komponenten A) und B) immer 65 bis 82 Gew.-% Propylen, 25 bis 14 Gew.-% Buten-1- und 10 bis 4 Gew.-% Ethylen-Einheiten ergeben müssen,
2. 65 bis 30 Gew.-%, vorzugsweise 62 bis 40 Gew.-% eines Propylen/Ethylen-Copolymeren mit 2 bis 6 Gew.-% Ethylen-Einheiten, wobei die Summe aus 1. und 2. immer 100 Gew.-% ergeben muß, und
3. gegebenenfalls üblichen Hilfs- und Zusatzstoffen
2. Opake Mehrschichtfolie nach Anspruch 1, dadurch gekennzeichnet, daß die Basisschicht 3 bis 15 Gew.-% unverträgliche anorganische oder organische, teilchenförmige Additive enthält.
3. Mehrschichtfolie nach Anspruch 1 oder 2, dadurch gekennzeichnet, daß sie eine Gassperrschicht aus verseiftem Ethylen/Vinylacetat-Copolymerisat und gegebenenfalls Haftvermittlerschichten enthält.
4. Verwendung der Mehrschichtfolien nach Ansprüchen 1 bis 3 als Einschlagfolie, insbesondere für Lebensmittel.
5. Verwendung der Mehrschichtfolien nach Anspruch 1 als Einschlagfolie für Zigarettenpäckchen.

**Claims**

1. Heat-sealable, at least monoaxially orientated multi-layer film of a base layer of a polypropylene and at least one heat-sealable layer of ter- and copolymers consisting of propylene, but-1-ene and ethylene units, characterized in that the heat-sealable layer is composed of

1. 35 to 70 % by weight, preferably 38 to 60 % by weight, of olefin polymers of
A) at least one terpolymer consisting of

a) 65 to 82 % by weight of propylene units,
b) 25 to 14 % by weight of but-1-ene units and
c) 10 to 4 % by weight of ethylene units, and

B) 0 to 7 % by weight of a copolymer of ethylene and but-1-ene units,

wherein the sum of A) and B) or of a) to c) must always give 100 % by weight and the content of components A) and B) must always give 65 to 82 % by weight of propylene units, 25 to 14 % by weight of but-1-ene units and 10 to 4 % by weight of ethylene units,

2. 65 to 30 % by weight, preferably 62 to 40 % by weight, of a propylene/ethylene copolymer with 2 to 6 % by weight of ethylene units, wherein the sum of 1. and 2. must always give 100 % by weight, and

3. if appropriate customary auxiliaries and additives.

2. Opaque multi-layer film according to Claim 1, characterized in that the base layer contains 3 to 15 % by weight of incompatible inorganic or organic additives in particle form.

3. Multi-layer film according to Claim 1 or 2, characterized in that it contains a gas barrier layer of a hydrolysed ethylene/vinyl acetate copolymer and, if appropriate, adhesion promoter layers.

4. Use of the multi-layer films according to claims 1 to 3 as wrapping film, in particular for foodstuffs.

5. Use of the multi-layer films according to claim 1 as wrapping film for cigarette packs.


## Revendications

1. Feuilles multicouches thermoscellables, orientées au moins mono-axialement, composées d'une couche de base consistant en un polypropylène et au moins une couche thermoscellable qui consiste en ter- et copolymères consistant en unités de propylène, de butène-1 et d'éthylène, caractérisées en ce que la couche thermoscellable est composée de

1. 35 à 70 % en poids, de préférence 38 à 60 % de polymérisats d'oléfines comportant
A) au moins un terpolymère consistant en

a) 65 à 82 % en poids d'unités de propylène,
b) 25 à 14 % en poids d'unités de butène-1,
c) 10 à 4 % en poids d'unités d'éthylène et

B) 0 à 7 % en poids d'un copolymère d'unités d'éthylène et de butène-1,

la somme de A) et B) ou la somme de a) à c) étant toujours égale à 100 % et la teneur en monomère des composants A) et B) devant toujours représenter 65 à 82 % en poids de propylène, 25 à 14 % en poids d'unités de butène-1 et 10 à 4 % en poids d'unités d'éthylène,

2. 65 à 30 %, de préférence 62 à 40 % d'un copolymère de propylène/éthylène avec 2 à 6 % en poids d'unités d'éthylène, la somme de 1. et 2. devant toujours être égale à 100 %, et

3. éventuellement des adjuvants et additifs usuels.

2. Feuilles multicouches opaques selon la revendication 1, caractérisées en ce que la couche de base contient 3 à 15 % en poids de particules d'additifs inorganiques ou organiques incompatibles.

3. Feuilles multicouches selon la revendication 1 ou 2, caractérisées en ce qu'elles comportent une barrière aux gaz consistant en un copolymérisat d'éthylène/acétate de vinyle saponifié et éventuellement des couches adhésives.

4. Utilisation des feuilles multicouches selon les revendications 1 à 3 comme feuilles d'emballage par enveloppement, en particulier pour l'emballage de denrées alimentaires.

5. Utilisation des feuilles multicouches selon la revendication 1 comme feuilles d'emballage par enveloppement pour l'emballage de paquets de cigarettes.